Europäisches Patentamt

European Patent Office

Office européen des brevets

(19)

(11) Publication number: **0 255 221 B1**

## EUROPEAN PATENT SPECIFICATION

(45) Date of publication of the patent specification:
07.11.90

(51) Int. Cl.⁵: **F16L 41/08, F16L 13/14**

(21) Application number: **87305352.4**

(22) Date of filing: **17.06.87**

(54) High pressure tube attachment mechanisms.

(30) Priority: **28.07.86 US 891442**

(43) Date of publication of application:
**03.02.88 Bulletin 88/5**

(45) Publication of the grant of the patent:
**07.11.90 Bulletin 90/45**

(84) Designated Contracting States:
**DE FR GB**

(56) References cited:
**DE-A- 1 625 961**
**US-A- 2 687 906**
**US-A- 3 468 566**
**US-A- 4 545 604**

(73) Proprietor: **GENERAL MOTORS CORPORATION,
General Motors Building 3044 West Grand Boulevard,
Detroit Michigan 48202(US)**

(72) Inventor: **Goubeaux, Carl Edwin, 1495 McKaig Avenue,
Troy Ohio 45373(US)**
Inventor: **Flory, Donald Marion, 3620 Arcanum-Bearsmill,
Arcanum Ohio 45304(US)**

(74) Representative: **Denton, Michael John et al, Patent
Section Vauxhall Motors Limited 1st Floor Gideon
House 26 Chapel Street, Luton Bedfordshire
LU1 2SE(GB)**

## Description

The invention relates to mechanisms for attaching the ends of high pressure tubing to a housing which provides appropriate passages for conducting fluid under high pressure to and from the interior of the tubing. It more particularly relates to securing devices which fit about a tubing end and are press-fitted in place so that the securing device is secured to both the housing and the tube end by press-fitting.

A known arrangement is disclosed in US-A 2 687 906, and has the features specified in the precharacterising portion of Claim 1. This known arrangement has several disadvantages including critical tolerances in dimensions; the requirement of a special staking tool; and limited application.

A high pressure tube attachment mechanism in accordance with the present invention is characterised over US-A 2 687 906 by the features specified in the characterising portion of Claim 1.

In one embodiment the securing device is a cylindrical ferrule which is positioned about a tube end, after which the ferrule and the tube end are press-fitted through an opening in the housing to deform at least a portion of the securing device by a taper construction of the housing opening so that the securing device is press-fitted to the housing and also is deformed inwardly to be press-fitted about the end of the tube. This will result in both sealing and mechanical retention of the tube in the housing.

Another embodiment uses a similar securing device which has one end closed and is provided with a cross passage for fluid connection between the interior passage of the tube and a housing passage. The closed end is also press-fitted into the opening so as to seal the opening at the opposite end of the securing device from that portion which seals the housing and tube end device together.

Still another embodiment is similar to the second embodiment but uses a head spaced slightly from the closed enlarged section to provide an annular recess. The head is so arranged that when the securing device is press-fitted into the housing it also deforms a portion of the housing material into the recess and further secures the securing device in place in the housing.

The present invention is now described, by way of example, with reference to the accompanying drawings, in which:-

FIGURES 1 and 2 are cross-section views with parts broken away illustrating one embodiment of the invention, with Figure 1 showing the attachment arrangement before the final securing action takes place and Figure 2 showing the invention after the securing action has been completed;

FIGURES 3 and 4 are similar to Figures 1 and 2 and illustrate another embodiment of the invention;

FIGURE 5 is a view similar to Figure 4 illustrating another embodiment of the invention; and

FIGURE 6 is a cross-section view with parts broken away taken in the direction of arrows 6-6 of Figure 5.

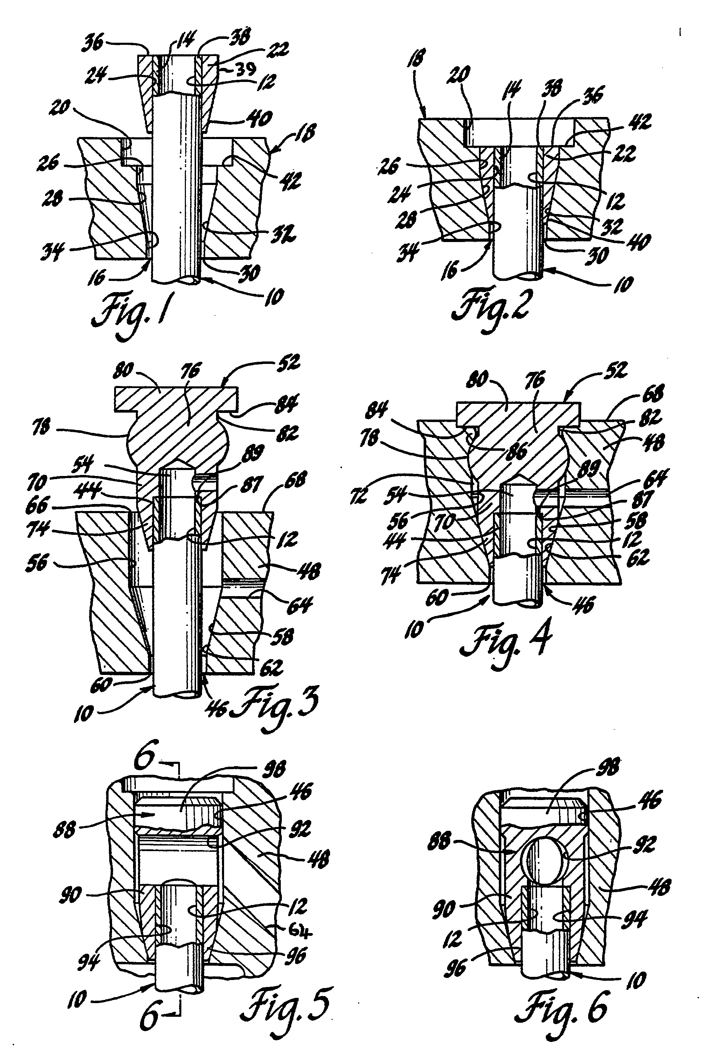

Devices embodying the invention herein disclosed and claimed are particularly useful in attaching the ends of the stainless steel spring tube disclosed in our published European Patent application No.0200387. In that application, the tube has one end fastened to a housing which is normally fixed in place and the other end fastened to another housing which is movable. When the invention herein disclosed and claimed is used in that arrangement, it is desirable to use the embodiment of Figures 1 and 2 at one tube end and either the embodiment of Figures 3 and 4 or Figures 5 and 6 at the other tube end. High pressure fluid is delivered through the tube. The manner of fastening the tube ends in that application involves a tapered opening with the tube end being flared after being placed in the tapered opening. The flaring arrangement provides the necessary sealing and retention.

The mechanisms embodying the invention herein disclosed and claimed include an open end attachment illustrated in Figures 1 and 2 and closed end attachments illustrated in Figures 3, 4 and 5, 6.

Referring now more specifically to the drawings, the tube 10 is preferably annealed stainless steel tubing having an interior passage 12 extending therethrough. As disclosed in the above noted patent application, it may also be a spring.

Referring more specifically to Figures 1 and 2, one tube end 14 is secured in an opening 16 formed in housing 18 so that the interior passage 12 is fluid connected with the space or chamber 20 within housing 18. Space 20 is essentially an extension of the opening 16. A securing device 22 is formed as a cylindrical ferrule which has an inner passage 24 of an inner diameter which, in relation to the outer diameter of tube end 14, will permit the securing device 22 to fit closely but slide over the tube end. This may be readily accomplished by extending the tube end 14 into opening 16 sufficiently far to permit this to occur, as shown in Figure 1.

Opening 16 is illustrated as being divided into a first section 26 and a second section 28, with first section 26 opening toward space 20 and second section 28 extending from the first section to the outer end 30 of opening 16 from which tube 10 is to extend after being secured in place in housing 18. The first section 26 may be cylindrical, and its diameter is sufficiently large to permit securing device 22 to be placed therein as it fits about tube end 14. The second section 28 of opening 16 has at least a portion 32 thereof conically tapered with about a two degree decreasing diameter taper. In each of the Figures the amount of taper in exaggerated to make the taper obvious. The taper may extend to the outer end 30 of opening 16 or, as illustrated, may stop slightly short of the outer end 30 so that a minor portion 34 of the second section 28 is cylindrical but of smaller diameter than the diameter of the first section 26. The outer end 30 and the minor portion 34 of the second section 28 is at least as large as, and preferably larger than, the outer diameter of tube 10.

The securing device 22 has a transverse end surface 36 facing space 20 after installation and tube end 14 has a similar transverse end surface 38 also facing space 20 after installation as shown in Figure 2. Referring now to Figure 1, these transverse end surfaces 36,38 are substantially aligned in a common plane before the press-fit operation is performed. They are positioned in or adjacent space 20 with the securing device 22 extending toward or into the first section 26 for guiding relation. A suitable press arbor is then used to engage the transverse end surfaces 36 and 38 at their common plane within the opening 16 so as to concurrently press the securing device 22 and the tube end 14 further through the opening 16. The press action causes a first 39 and second 40 portion of the securing device 22 to move into the opening 16, and causes the second portion 40 of securing device 22 to be deformed by the tapered arrangement of the portion 32 of second section 28, causing the second portion 40 to decrease slightly in both inner and outer diameter and press radially inwardly against tube end 14 while also pressing radially outwardly against the tapered surface of portion 32 of second section 28, as illustrated in Figure 2. A shoulder 42 in opening 16 at the juncture of space 20 and the first section 26 will act to stop the press arbor and therefore locate the transverse end surfaces 36 and 38 of securing device 22 and tube end 14 respectively in the plane of that shoulder which is then coincident with the common plane of transverse end surface 36 and 38, as shown in Figure 2. This will also serve to properly locate the securing device 22 in relation to the tapered portion of opening 16 to acquire the proper press fit needed to secure the tube end 14 to housing 18 for mounting purposes as well as securing it against high pressure leaks. In the application of the invention to the mechanism of the above noted patent application, it is required that the tube end 14 hold fluid pressure on the order of about 34474 kPa (5,000 p.s.i.), and that it resist axial and torsional forces on the tube 10 which would tend to loosen or remove it from opening 16. It can be seen that the press fit of securing device 22 to both the housing 18 and the tube end 14 will form a pressure seal and function as a mechanical retainer for the tube 10.

Referring now to Figures 3 and 4, the tube end 44, which may be the other end of the tube spring in the above noted patent application, is secured in an opening 46 in a housing 48 in a generally similar manner. However, a securing device 52 having a closed end is used instead of the open end securing device 22. Securing device 52 is provided with an inner passage 54 which extends axially part way through the securing device and then laterally to one side of the securing device.

Opening 46 has a first section 56 and a second section 58 adjacent the first section and extending to the outer end 60 of opening 46 through which tube 10 extends when secured in place as illustrated in Figure 4. Second section 58 has at least a portion 62 which is conically tapered with about a two degree taper, from the juncture of the first section 56 and the second section 58, toward the outer end 60 so that the portion 62 decreases in diameter as it progresses from first section 56 toward the outer end 60. While the (tapered) portion 62 may extend all the way to the outer end 60, it is illustrated as terminating slightly short of that outer end so a portion of the opening immediately adjacent the outer end 60 is cylindrical but of a larger diameter than the outer diameter of tube 10. To the extent so far described, the construction of opening 46 is quite similar to that of opening 16 earlier described.

The housing 48 is formed to provide a side passage 64 which intersects, and is therefore in fluid communication with, a part of the first section 56 near the juncture of that first section with the second section 58. As is readily ascertained, side passage 64 is therefore in fluid communication with the inner passage 54 of the securing device 52 when it is installed as illustrated in Figure 4, and therefore in fluid communication with the interior passage 12 of tube 10. The opening end 66 opposite outer end 60 extends through the housing surface 68, which is somewhat comparable to the shoulder 42 in the earlier described construction.

The securing device 52 has a first portion 70 which is the centre portion having the lateral portion of inner passage 54 formed through one side thereof from the axial portion of inner passage 54. The outer diameter of first portion 70 is sufficiently less than the diameter of the first section 56 to provide an annular space 72 therebetween, thus facilitating the fluid communication between the side passage 64 and the inner passage 54 of the securing device 52. Securing device 52 has a second portion 74 at one end thereof which extends toward the outer end 60. When installed, as illustrated in Figure 4, the second portion 74 is axially pressed into the (tapered) section 62.

Securing device 52 has a third portion 76 which defines the other end of the securing device opposite the second portion 74. The third portion 76 is a closed end section in that the axial portion of inner passage 54 does not extend therethrough. Third portion 76 has a solid diametrical section 78 which is slightly greater in diameter than the diameter of the first section 56. It is therefore the part of securing device 52 which is press-fitted into the opening end 66 when it is being installed, closing and sealing that end of opening 46. Solid diametrical section 78 is illustrated as being shaped somewhat like the outer peripheral surface of a torus in that, as seen in axial cross-section, the surface is arcuately formed. A head 80 is formed on the outer end of third portion 76 and cooperates with the solid diametrical section 78 to provide a recess 82 which is annular and outwardly opening therebetween. Head 80 is of any suitable shape, and may be round or hexagonal by way of example. It is of greater diameter than the solid diametrical section 78 so that when the securing device 52 is press-fitted into opening 46 the solid diametrical section 78 will pass into and slightly deform the housing wall defining the first section 56 of opening 46, as illustrated. This is much like the action of using a ball to seal an opening, as shown in the above noted patent application. As the securing device 52 is further pressed in, the lower side 84 of head 80 engages the housing surface 68 about and immediately adjacent the opening end 66 of opening 46. As the securing device 52 is pressed further inward, the head 80 causes some of the housing material to be displaced inwardly into recess 82 as illustrated at 86 in Figure 4. This further secures securing device 52 in the opening 46.

The axial portion of inner passage 54 of securing device 52 is arranged to receive the tube end 44 for a distance which terminates short of the lateral portion of the inner passage 54, inner passage 54 being provided with a shoulder 87 which is engaged by the transverse end surface 89 of tube end 44 in abutting relation. Thus the tube end 44 is inserted into the end of axial passage 54 until it abuts shoulder 87. For this purpose the tube 10 will have been extended through opening 46 sufficiently to make this connection before the press-fitting operation as illustrated in Figure 3. The securing device 52, with the tube end 44 in place as described, is then press-fitted into opening 46 as earlier described. In addition to the press fit action taking place between the side wall of the first section 56 and the solid diametrical section 78, and the housing surface 68 and the head 80 of securing device 52, the second portion 74 of securing device 52 acts in the same manner as the second portion of the securing device 22 earlier described. It engages the approximately two degree taper of the second section 58 so as to be deformed by the press-fitting action to be press-fitted to the tapered portion of the housing forming the tapered portion of second section 58, and also is press-fitted inwardly to be press-fitted against the outer diameter of tube end 44 to secure and seal the tube 10 in place as illustrated. As in the embodiment earlier described, the securing and sealing action of tube 10 at its tube end 44 must also hold a pressure of about 34474 kPa (5,000 p.s.i.) as well as hold the tube in place against forces tending to loosen it axially or rotationally.

The embodiment shown in Figures 5 and 6 is similar to the securing device 52 of Figures 3 and 4. However, it does not have the head 80 which displaces any of the housing material into a recess. The securing device 88 of Figures 5 and 6 has a first portion 90 similar to the first portion 70 of securing device 52 except that the lateral portion of inner passage 54 is formed as a through passage 92 which intersects the top of an axial passage 94, the through passage 92 being of such a diameter and relative location in relation to the axial passage 94 that a shoulder is provided to engage the tube end. Otherwise the second portion 96 is constructed in a manner similar to the second portion 74 of securing device 52. The third portion 98 is a solid diametrical section similar to solid diametrical section 78 of securing device 52. However, in this instance it is illustrated as having beveled edge surfaces rather than being an arcuate surface.

The securing device 88 is installed in housing 48 in the same manner as securing device 52 except for the fact that it is press-fitted completely into the opening 46 so that the third portion 98 closes and seals the upper end of the opening, with the press-fitting sealing-and-securing action of the second portion 96 taking place at the tapered section of opening 46 as before.

Housings 18 and 48 may be made of aluminium or a suitable aluminium alloy, by way of example. While the securing device 22 is preferably made of annealed stainless steel, the securing devices 52 and 88 may be made of annealed stainless steel or brass. Tube 10 is preferably made of spring stainless steel.

## Claims

1. A high pressure tube attachment mechanism comprising: a housing (18, 48) having an opening (16, 46) therein through which high pressure fluid may be conducted, the opening (16, 46) having a first section (26, 56) defined by a right cylindrically formed wall and a second section (28, 58) extending from the first section; a high pressure tube (10) having an interior passage (12) and having one tube end (14, 44) positioned in the opening so as to transmit fluid pressure between the opening and the interior passage of the tube, the tube extending from an outer end (30, 60) of the opening when secured in place, with the tube end extending axially into the outer end; and a securing device having first (70, 90) and second portions (40, 74, 96) extending axially and inwardly of the opening, the second portion has an outer diameter which is less than the diameter of the first section (26, 56) and the first and second portions have an inner diameter in which the tube end (14, 44) is slidably received in at least a part of the securing device prior to final assembly of the tube attachment mechanism; characterised in that the second section (28, 58) of the opening (16, 46) has at least a portion (32, 62) thereof conically tapered with about a two degree decreasing diameter taper, the second section terminating at the outer end (30, 60) of the opening, the minimum diameter of the opening being greater than the outer diameter of the tube end (14, 44), the tube end extending at least through a major portion of the conically tapered portion (32, 62) of the second section; in that the securing device (22, 52) is insertable into the opening (16, 46) from the opposite end to the outer end (30, 60); in that the first portion (70, 90) has an outer diameter which is less than the diameter of the first section (26, 56); and in that the second portion (40, 74, 96) of the securing device (70, 90) extends toward the outer end (30, 60) of the opening and fits into the second section (28, 58) of the opening, the securing device having been axially pressed to extend into the second section and be outwardly press-fitted to the second section and also be inwardly press-fitted to the tube end to a sufficient extent to sealingly secure the tube end to the housing so as to hold fluid pressure of the order of 34474 kPa (5,000 p.s.i.) and to hold the tube securely in the opening against axial and rotational removal forces tending to remove the tube from the housing.

2. A tube attachment mechanism as claimed in Claim 1, wherein the securing device (22) has a transverse end surface (36) and the tube end (14) has a transverse end surface (38), the transverse end surfaces being in a common plane within the opening (16) during and after the press-fitting action so that the tube end extends coextensively through the securing device, and the axially exerted press-fitting force during the press-fitting action is exerted on both transverse end surfaces.

3. A tube attachment mechanism as claimed in Claim 1, wherein the securing device (52, 88) has a shoulder (87) and the tube end (44) has a transverse end surface (89) in abutting engagement with the shoulder during and after the press-fitting action to provide axial location of £ the tube end relative to the securing device and the opening (46).

4. A tube attachment mechanism as claimed in Claim 1, wherein the securing device is a cylindrical ferrule which was of a uniform inner and outer diameter before being pressed into the second section of the opening and after being so pressed has a decreased inner diameter about the tube end and a tapered outer diameter engaging the second section radially outwardly of at least a portion of the tube end.

5. A tube attachment mechanism as claimed in Claim 4, in which the securing device is made of annealed stainless steel and the tube is made of spring stainless steel.

6. A tube attachment mechanism as claimed in Claim 1, wherein the securing device (52, 88) has a third portion (76, 98) defining the other end thereof axially opposite the second portion (74,96), the third portion being closed and formed to include a solid diametrical section (78, 98) of greater diameter than the diameter of the first section (56) of the opening (46), the solid diametrical section also being pressfitted into the first section when the securing device is axially pressed into the second section (58) to further secure the securing device in the opening and to seal an opening end (66) of the first section opposite the second section, the housing (48) having a side passage (64) intersecting the opening and the securing device having an inner passage (54, 92, 94) formed therein for fluid connecting the interior passage (12) of the tube (10) and the side passage (64).

7. A tube attachment mechanism as claimed in Claim 6, wherein the securing device (52) further includes a head (80) formed axially adjacent the third portion (78) and cooperating therewith to define an annular outwardly opening recess (82) therebetween, the head being of greater diameter than the third portion and positioned out of the opening (46) in axially spaced relation thereto before the securing device is axially pressed in place, and after the securing device is axially pressed in place having engaged and deformably displaced at least a portion of the housing (48) around the opening end (66) of the first section (56) into the annular outwardly opening recess and into engagement with the third portion to further secure the securing device in the opening.

8. A tube attachment mechanism as claimed in Claim 6 or Claim 7, wherein the securing device (52) is made of brass.

## Revendications

1. Mécanisme de branchement de tube à haute pression, comprenant: un boîtier (18, 48) présentant une ouverture (16, 46) à travers laquelle on peut faire passer un fluide sous haute pression, l'ouverture (16, 46) possédant une première partie (26, 56) définie par une paroi droite de configuration cylindrique, et une deuxième partie (28, 59) qui part de la première partie; un tube à haute pression (10) possédant un passage intérieur (12) et ayant une première extrémité de tube (14, 44) positionnée dans l'ouverture de manière à transmettre la pression du fluide entre l'ouverture et le passage intérieur du tube, le tube dépassant d'une extrémité extérieure (30, 60) de l'ouverture lorsqu'il est fixé en place, l'extrémité du tube s'étendant axialement dans l'extrémité extérieure, et un dispositif de blocage possédant une première (70, 90) et une deuxième portions (40, 74, 96) qui s'étendent axialement par rapport à l'ouverture et à l'intérieur de cette ouverture, la deuxième portion possédant un diamètre extérieur qui est plus petit que le diamètre de la deuxième partie (26, 56) et les première et deuxième portions ayant un diamètre intérieur dans lequel l'extrémité (14, 44) du tube est logée à coulissement dans au moins une partie du dispositif de blocage avant l'assemblage final du mécanisme de branchement de tube, caractérisé en ce que la deuxième partie (28, 58) de l'ouverture (16, 46) présente au moins une portion (32, 62) de forme conique, avec une pente de décroissance de diamètre de deux degrés, la deuxième partie se terminant au niveau de l'ouverture extérieure (30, 60) de l'ouverture, le diamètre minimum de l'ouverture étant plus grand que le diamètre extérieur de l'extrémité (14, 44) du tube, l'extrémité du tube s'étendant au moins sur une grande partie de la portion à pente de forme conique (32, 62) de la deuxième partie; en ce que le dispositif de blocage (22, 52) peut être inséré dans l'ouverture (16, 46) par l'extrémité opposée à l'extrémité extérieure (30, 60); en ce que la première portion (70, 90) a un diamètre extérieur qui est plus petit que le diamètre de la première partie (26, 56); et en ce que la deuxième portion (40, 74, 96) du dispositif de blocage (70, 90) s'étend vers l'extrémité extérieure (30, 60) de l'ouverture et s'ajuste dans la deuxième partie (28, 58) de l'ouverture, le dispositif de blocage ayant été enfoncé axialement pour s'engager dans la deuxième partie et ayant sa face extérieure, emmanchée à force par rapport à la deuxième partie et sa face intérieure, emmanchée à force sur l'extrémité du tube dans une mesure suffisante pour fixer l'extrémité du tube à joint étanche par rapport au boîtier de manière à résister à une pression de fluide de l'ordre de 34 474 kPa (50 000 p.s.i.) et à retenir le tube solidement dans l'ouverture à l'encontre des forces d'arrachage axiales et de rotation qui tendraient à arracher le tube du boîtier.

2. Mécanisme de branchement de tube selon la revendication 1, dans lequel le dispositif de blocage (22) possède une surface terminale transversale (36) et l'extrémité (14) du tube possède une surface terminale transversale (38), les surfaces terminales transversales se trouvant dans un plan commun à l'intérieur de l'ouverture (16) pendant et après l'action d'emmanchement à force, de sorte que l'extrémité du tube s'étend dans le dispositif de blocage sur toute la longueur de celui-ci et que la force d'emmanchement à force exercée axialement pendant l'action d'emmanchement à force est exercée sur les deux surfaces terminales transversales.

3. Mécanisme de branchement de tube selon la revendication 1, dans lequel le dispositif de blocage (52, 88) possède un épaulement (87) et l'extrémité (44) du tube possède une surface terminale transversale (89) qui est en appui en butée contre l'épaulement pendant l'action d'emmanchement à force pour assurer le positionnement axial de l'extrémité du tube par rapport au dispositif de blocage et par rapport à l'ouverture (46).

4. Mécanisme de branchement de tube selon la revendication 1, dans lequel le dispositif de blocage est une bague cylindrique qui était de diamètre intérieur et extérieur uniforme avant d'être emmanchée à force dans la deuxième partie de l'ouverture et qui, après avoir été emmanchée à force, possède un diamètre intérieur réduit autour de l'extrémité du tube et un diamètre extérieur à pente, qui est en appui contre la deuxième partie, radialement à l'extérieur d'au moins une partie de l'extrémité du tube.

5. Mécanisme de branchement de tube selon la revendication 4, dans lequel le dispositif de blocage est fait d'acier inoxydable recuit et le tube est fait d'acier inoxydable à ressorts.

6. Mécanisme de branchement de tube selon la revendication 1, dans lequel le dispositif de blocage (52, 88) possède une troisième portion (76, 98) qui définit son autre extrémité, à l'opposé de la deuxième portion (74, 96) dans la direction axiale, la troisième portion étant fermée et formée de façon à inclure une section diamétrale pleine (78, 98) de plus grand diamètre que la première partie (56) de l'ouverture (46), la section diamétrale pleine étant aussi emmanchée dans la première partie lorsque le dispositif de blocage est emmanché axialement à force dans la deuxième partie (58) pour bloquer le dispositif de blocage encore plus fortement dans l'ouverture et fermer à joint étanche une extrémité d'ouverture (66) de la première partie qui se trouve à l'opposé de la deuxième partie, le boîtier (48) ayant un passage latéral (64) qui coupe l'ouverture et le dispositif de blocage possédant un passage intérieur (54, 92, 94) qui y est formé pour faire communiquer le passage intérieur (12) du tube (10) avec le passage latéral (64) pour la transmission du fluide.

7. Mécanisme de branchement de tube selon la revendication 6, dans lequel le dispositif de blocage (52) comprend en outre une tête (80) formée axialement adjacente à la troisième portion (78) et coopérant avec celle-ci pour définir entre elles une gorge annulaire (82) s'ouvrant vers l'extérieur, la tête étant de plus grand diamètre que la troisième portion et étant située en dehors de l'ouverture (46) et espacée axialement de celle-ci avant que le dispositif de blocage ne soit mis en place par emmanchement axial à force tandis qu'après la mise en place du dispositif de blocage par emmanchement axial à force, cette tête a attaqué au moins une portion du boîtier (48) autour de l'extrémité d'ouverture (66) de la première partie (56), et l'a refoulée dans la gorge annulaire s'ouvrant vers l'extérieur et appliquée contre la troisième portion pour bloquer le dispositif de blocage encore plus fortement dans l'ouverture.

8. Mécanisme de branchement de tube selon la revendication 6 ou la revendication 7, dans lequel le dispositif de blocage (52) est en laiton.

**Patentansprüche**

1. Hochdruckrohr-Befestigungsmechanismus mit: einem Gehäuse (18, 48), das eine Öffnung (16, 46) besitzt, durch welche Hochdruckfluid geleitet werden kann, wobei die Öffnung (16, 46) eine erste Sektion (26, 56) besitzt, die durch eine als gerader Zylinder ausgebildete Wand definiert ist, und eine zweite Sektion (28, 58), die von der ersten Sektion absteht; einem Hochdruckrohr (10) mit einem Innendurchlaß (12), dessen eines Rohrende (14, 44) in die Öffnung so eingesetzt ist, daß Fluiddruck zwischen der Öffnung und dem Innendurchlaß des Rohrs übertragen wird, wobei sich das Rohr von einem äußeren Ende (30, 60) der Öffnung erstreckt, wenn es an seinem Ort befestigt ist, mit axial in das äußere Ende reichendem Rohrende; und einer Sicherungseinrichtung mit ersten (70, 90) und zweiten Abschnitten (40, 74, 96), die sich axial und nach innen von der Öffnung erstrecken, wobei der zweite Abschnitt einen Außendurchmesser besitzt, der geringer als der Durchmesser der ersten Sektion (26, 56) ist und die ersten und zweiten Abschnitte Innendurchmesser besitzen, in denen das Rohrende (14, 44) gleitbar vor dem endgültigen Zusammenbau des Rohrbefestigungs-Mechanismus in mindestens einem Teil der Sicherungseinrichtung aufgenommen ist; dadurch gekennzeichnet, daß die zweite Sektion (28, 58) der Öffnung (16, 46) an mindestens einem ihrer Abschnitte (32, 62) konisch verjüngt ist mit einer Verjüngung mit etwa um 2° abnehmendem Durchmesser, die zweite Sektion an dem äußeren Ende (30, 60) der Öffnung endet, wobei der Minimaldurchmesser der Öffnung größer als der Außendurchmesser des Rohrendes (14, 44) ist, das Rohrende sich mindestens durch einen größeren Teil des sich konisch verjüngenden Abschnitts (32, 62) der zweiten Sektion erstreckt: daß die Sicherungseinrichtung (22, 52) in die Öffnung (16, 46) von dem entgegengesetzten Ende zu dem äußeren Ende (30, 60) einsetzbar ist: daß der erste Abschnitt (70, 90) einen Außendurchmesser besitzt, der geringer als der Durchmesser der ersten Sektion (26, 56) ist; und daß der zweite Abschnitt (40, 74, 96) der Sicherungseinrichtung (70, 90) sich zu dem äußeren Ende (30, 60) der Öffnung hin erstreckt und in die zweite Sektion (28, 58) der Öffnung paßt, wobei die Sicherungseinrichtung axial gepreßt wurde, um sich in die zweite Sektion hinein zu erstrecken und nach außen mit der zweiten Sektion und auch nach innen mit dem Rohrende in einem ausreichenden Ausmaß preßgepaßt ist, um dichtend das Rohrende an dem Gehäuse so zu sichern, daß es Fluiddruck in der Größenordnung von 34 474 kPa (5 000 p.s.i.) hält und das Rohr sicher in der Öffnung hält gegen axiale und rotierende Entfernungskräfte, die dazu tendieren, das Rohr von dem Gehäuse zu entfernen.

2. Rohrbefestigungs-Mechanismus nach Anspruch 1, bei dem die Sicherungseinrichtung (22) eine Quer-Endfläche (36) besitzt und das Rohrende (14) eine Quer-Endfläche (38) besitzt, daß die Quer-Endflächen während und nach der Preßpaß-Betätigung in einer gemeinsamen Ebene innerhalb der Öffnung (16) sind, so daß das Rohrende sich koextensiv durch die Sicherungseinrichtung erstreckt, und die axial ausgeübte Preßpaßkraft während der Preßpaßbetätigung auf beide Querendflächen ausgeübt wird.

3. Rohrbefestigungs-Mechanismus nach Anspruch 1, bei dem die Sicherungseinrichtung (52, 88) eine Schulter (87) besitzt und das Rohrende (44) eine Querendfläche (89) in Abstützanlage an der Schulter besitzt während und nach der Preßpaßbetätigung, um axiale Lokalisierung des Rohrendes relativ zu der Sicherungseinrichtung und der Öffnung (46) zu schaffen.

4. Rohrbefestigungs-Mechanismus nach Anspruch 1, bei dem die Sicherungseinrichtung eine zylindrische Hülse ist, die vor dem Einpressen in die zweite Sektion der Öffnung von gleichförmigem Innen- und Außendurchmesser war und nach dieser Pressung einen verringerten Innendurchmesser um das Rohrende und einen sich verjüngenden Außendurchmesser besitzt, der an der zweiten Sektion radial außerhalb von mindestens einem Abschnitt des Rohrendes anliegt.

5. Rohrbefestigungs-Mechanismus nach Anspruch 4, bei dem die Sicherungseinrichtung aus angelassenem Edelstahl und das Rohr aus Feder-Edelstahl gefertigt ist.

6. Rohrbefestigungs-Mechanismus nach Anspruch 1, bei dem die Sicherungseinrichtung (52, 88) einen dritten Abschnitt (76, 98) besitzt, der das andere Ende derselben axial gegenüber dem zweiten Abschnitt (74, 96) bestimmt, wobei der dritte Abschnitt geschlossen und so ausgebildet ist, daß er einen massiven Diametralabschnitt (78, 98) von größerem Durchmesser als dem Durchmesser der ersten Sektion (56) der Öffnung (46) enthält, wobei der massive Diametralabschnitt auch in die erste Sektion preßgepaßt ist, wenn die Sicherungseinrichtung axial in die zweite Sektion (58) gepreßt ist, um die Sicherungseinrichtung in der Öffnung weiter zu sichern und ein Öffnungsende (66) der ersten Sektion gegenüber der zweiten Sektion abzudichten, wobei das Gehäuse (48) einen die Öffnung überschneidenden Seitenwand-Durchlaß (64) besitzt und die Sicherungseinrichtung einen Innendurchlaß (54, 92, 94) darin ausgebildet besitzt zur Fluidverbindung des Innendurchlasses (12) des Rohres (10) mit dem Seitenwand-Durchlaß (64).

7. Rohrbefestigungs-Mechanismus nach Anspruch 6, bei dem die Sicherungseinrichtung (52) weiter einen dem dritten Abschnitt (78) axial benachbart ausgebildeten und damit zusammenwirkenden Kopf (80) enthält, um einen ringförmigen, sich nach außen öffnenden Einschnitt (82) dazwischen zu definieren, wobei der Kopf einen größeren Durchmesser als der dritte Abschnitt aufweist und außerhalb der Öffnung (46) in axialer Abstandsbeziehung dazu eingesetzt ist, bevor die Sicherungseinrichtung axial an ihre Stelle gedrückt ist, und mit mindestens einem Abschnitt des Gehäuses (48) um das sich öffnende Ende (66) der ersten Sektion (56) in Eingriff gekommen ist und ihn, nachdem die Sicherungseinrichtung axial in ihren Ort gedrückt wurde, verformend in den ringförmigen sich nach außen öffnenden Einschnitt und in Eingriff mit dem dritten Abschnitt versetzt hat, um weiter die Sicherungseinrichtung in der Öffnung zu sichern.

8. Rohrbefestigungs-Mechanismus nach Anspruch 6 oder 7, bei dem die Sicherungseinrichtung (52) aus Messing hergestellt ist.

*Fig. 1*

*Fig. 2*

*Fig. 3*

*Fig. 4*

*Fig. 5*

*Fig. 6*